# EUROPÄISCHE PATENTSCHRIFT

(11) **EP 3 833 492 B1**
(45) Veröffentlichungstag und Bekanntmachung des Hinweises auf die Patenterteilung: **15.12.2021**
(21) Anmeldenummer: 19749323.2
(22) Anmeldetag: 01.08.2019
(51) Int. Cl.: B08B 3/02, B08B 9/00, B64F 5/30, F01D 25/00

(54) **VORRICHTUNG, VERFAHREN UND ANORDNUNG ZUR REINIGUNG DER CORE ENGINE EINES STRAHLTRIEBWERKS**
DEVICE, PROCESS AND ARRANGEMENT FOR CLEANING OF THE CORE ENGINE OF A JET ENGINE
DISPOSITIF, PROCÉDÉ ET AGENCEMENT POUR NETTOYER LE RÉACTEUR DE BASE D'UN MOTEUR À RÉACTION

(30) Priorität: 06.08.2018 DE 102018119094
(43) Veröffentlichungstag der Anmeldung: 16.06.2021
(73) Patentinhaber: Lufthansa Technik AG, 22335 Hamburg (DE)
(72) Erfinder: DEJA, Dirk, 64569 Nauheim (DE); LUTZ, Christian, 63743 Aschaffenburg (DE); GLASSE, Sina, 55128 Mainz (DE)
(74) Vertreter: Glawe, Delfs, Moll
(86) Internationale Anmeldenummer: PCT/EP2019/070742
(87) Internationale Veröffentlichungsnummer: WO 2020/030515

(56) Entgegenhaltungen:
- WO-A1-2008/113501
- WO-A1-2009/132847
- WO-A1-2015/079029
- US-A1- 2015 233 263

## Beschreibung

Die Erfindung betrifft eine Vorrichtung und ein Verfahren zum Reinigen der Core Engine eines Strahltriebwerks, mit einer Düseneinrichtung, die zum Einbringen von Reinigungsmedium in die Core Engine ausgebildet ist und Mittel zur drehfesten Verbindung mit der Welle des Fans des Strahltriebwerks aufweist; und mit einer Leitungsverbindung zum Zuführen von Reinigungsmedium, die über eine Drehkupplung mit der Düseneinrichtung verbunden ist.

Gegenstand der Erfindung ist ferner eine Anordnung aus einer solchen Vorrichtung und einem Strahltriebwerk.

Strahltriebwerke von kommerziellen Unterschallverkehrsflugzeugen sind heute weit überwiegend Turbofan-Strahltriebwerke. Ein solches Turbofan-Triebwerk besitzt eine Core Engine, in der der eigentliche Verbrennungsprozess des Kerosins abläuft. Die Core Engine besitzt in bekannter Weise eine oder mehrere Kompressorstufen, eine Brennkammer, sowie eine oder mehrere Turbinenstufen, in denen die heißen Verbrennungsgase einen Teil ihrer mechanischen Energie abgeben. Diese mechanische Energie wird zum einen für den Antrieb der Kompressorstufen benötigt, zum anderen wird ein stromauf vor der Core Engine angeordneter Turbofan angetrieben, der in der Regel einen erheblich größeren Durchmesser als die Core Engine aufweist und einen erheblichen Teil der das Triebwerk insgesamt durchströmenden Luft als Mantel- oder Nebenluftstrom an der Core Engine vorbeiströmen lässt. Der Turbofan bringt über diesen Mantelluftstrom einen erheblichen Teil der Schubleistung des Triebwerks auf, ferner sorgt der hohe Mantelluftstromanteil für eine bessere Umweltverträglichkeit des Triebwerks, insbesondere einen besseren Wirkungsgrad bei Unterschallgeschwindigkeiten, sowie eine verbesserte Geräuschdämmung des heißen Abgasstroms der Core Engine.

Strahltriebwerke werden im Betrieb durch Verbrennungsrückstände der Core Engine sowie durch mit der Verbrennung bzw. Mantelluft angesaugte Luftverunreinigungen wie beispielsweise Staub, Insekten, Salznebel oder sonstigen Umweltverunreinigungen kontaminiert. Diese Verunreinigungen bilden insbesondere auch auf den Rotor- und/oder Statorblades des Kompressors der Core Engine einen Belag, der die Oberflächengüte und damit letztendlich den thermodynamischen Wirkungsgrad des Triebwerks beeinträchtigt.

Zum Entfernen der Verunreinigungen werden Strahltriebwerke gereinigt. Aus WO 2005/077554 A1 ist es bekannt, zu diesem Zweck eine Mehrzahl von Reinigungsdüsen stromauf des Fans eines Turbofan-Triebwerks anzuordnen, um so den Fan und die Core Engine zu reinigen.

WO 2008/113501 A1 offenbart eine Vorrichtung der eingangs genannten Art, die auf den Fan aufgesetzt wird und im Reinigungsbetrieb mitrotiert.

Der Erfindung liegt die Aufgabe zugrunde, eine Vorrichtung, ein Verfahren und eine Anordnung der eingangs genannten Art zu schaffen, die eine gute Reinigungsleistung aufweisen.

Zur Lösung dieser Aufgabe ist erfindungsgemäß vorgesehen, dass die Düseneinrichtung wenigstens eine Flachstrahldüse und wenigstens eine Vollkegeldüse oder Hohlkegeldüse aufweist.

Zunächst seien einige im Rahmen der Erfindung verwendete Begriffe erläutert. Der Begriff Strahltriebwerk bezeichnet jegliche mobilen Gasturbinen für Luftfahrtanwendungen. Im Rahmen der Erfindung bezeichnet der Begriff insbesondere Turbofan-Triebwerke, bei denen die eigentliche Gasturbine eine sogenannte Core Engine bildet und stromauf der Core Engine ein im Durchmesser größerer Turbofan angeordnet ist, der einen Mantelluftstrom um die Core Engine erzeugt. Der Begriff Core Engine bezeichnet die eigentliche Gasturbine des Strahltriebwerks, in der der Verbrennungsprozess des Treibstoffs, insbesondere Kerosins, stattfindet. Eine solche Core Engine weist in der Regel eine oder mehrere Kompressorstufen, eine Brennkammer sowie ein oder mehrere Turbinenstufen auf, die von den heißen Verbrennungsgasen angetrieben werden.

Die Düseneinrichtung weist mehrere Düsen für das Reinigungsmedium sowie unten noch näher erläuterte Mittel zur drehfesten Verbindung dieser Düseneinrichtung und damit der Düsen mit der Welle des Fans des Strahltriebwerks auf.

Mittels Leitungsverbindung und Drehkupplung wird das Reinigungsmedium der Düseneinrichtung zugeführt. Der Begriff Leitungsverbindung ist im Rahmen der Erfindung weit zu verstehen und kann beispielsweise auch das stationäre (nicht mitdrehende) Anschlussstück an der Drehkupplung umfassen.

Eine nicht vom Patentanspruch umfasste Versorgungseinrichtung stellt Reinigungsmedium zur Verfügung (beispielsweise in einem oder mehreren Tanks) und kann mit Bedienungs- und Antriebseinrichtungen, Pumpen, Energiespeichern oder dergleichen versehen sein. Sie ist vorzugsweise als eine mobile, insbesondere fahrbare Einheit ausgebildet.

Kegeldüsen weisen einen im Wesentlichen rotationssymmetrischen Sprühstrahl auf, der die Form eines Hohlkegels (Hohlkegeldüsen) oder Vollkegels (Vollkegeldüsen) aufweist. Die Hauptaustrittsrichtung entspricht der Symmetrieachse des Kegels.

Flachstrahldüsen weisen einen flachen Sprühstrahl auf, der in einer ersten Raumrichtung senkrecht zur Hauptaustrittsrichtung einen wesentlich größeren Sprühwinkel bzw. Öffnungswinkel aufweist als in einer zweiten Raumrichtung senkrecht zur Hauptaustrittsrichtung und der ersten Raumrichtung. Der kleine (spitze) Öffnungswinkel kann beispielsweise 1° bis 5° betragen.

Erfindungsgemäß sind unter den Kegeldüsen die Vollkegeldüsen bevorzugt.

Die Erfindung hat erkannt, dass die Kombination von Flachstrahldüsen und Kegeldüsen, insbesondere Vollkegeldüsen, die Reinigungsleistung in der Core Engine deutlich verbessert. Flachstrahldüsen bewirken eine gute Reinigungsleistung im vorderen (stromauf befindlichen) Verdichterbereich. Kegeldüsen bewirken eine bessere Reinigung im hinteren (stromab befindlichen) Bereich der Core Engine, da sie bei ansonsten gleichen Betriebsbedingungen (Zufuhrmenge und Druck des Reinigungsmediums) flüssiges Reinigungsmedium feiner zerstäuben und langsamer austreten lassen. Auf diese Weise kann das Reinigungsmedium besser der Strömung durch die Core Engine folgen und als fein verteilte Tröpfchen tiefer eindringen.

Bevorzugt weist die erfindungsgemäße Vorrichtung wenigstens je eine, bevorzugt je zwei Flachstrahldüsen und Vollkegeldüsen auf. Die Kombination von zwei Flachstrahldüsen und zwei Vollkegeldüsen ergibt eine besonders gute Reinigungsleistung.

Bevorzugt ist es, dass jede Düse einen Sprühwinkel von 20° bis 120°, vorzugsweise 60° bis 90° aufweist. Der Begriff Sprühwinkel bezeichnet den größten Öffnungswinkel des Sprühkegels bzw. Sprühfächers.

Gemäß einer weiteren bevorzugten Ausführungsform der Erfindung schließt die Hauptaustrittsrichtung jeder Düse mit der Rotationsachse der Vorrichtung einen Winkel α von -45° bis 45°, vorzugsweise -5° bis 30° ein. Vorzugsweise ist dieser Winkel angepasst an das jeweils zu reinigende Triebwerksmuster. Die Rotationsachse der Vorrichtung entspricht im Reinigungsbetrieb der Rotationsachse des Triebwerks. Ein negatives Vorzeichen des Winkels bezeichnet eine von der Rotationsachse weg nach außen weisende Hauptaustrittsrichtung. Ein positives Vorzeichen des Winkels bezeichnet eine zur Rotationsachse hin nach innen weisende Hauptaustrittsrichtung, die im Regelfall bevorzugt ist.

Ein weiterer Gegenstand der Erfindung ist ein Verfahren zum Reinigen der Core Engine eines Strahltriebwerks mittels einer erfindungsgemäßen Vorrichtung. Bei diesem Verfahren weisen die Austrittsöffnungen der Düsen einen Abstand zur Eintrittsebene der Inlet Guide Vanes der Core Engine von 1 bis 25 cm, vorzugsweise 4 bis 15 cm auf.

Die Erfindung hat erkannt, dass die Wahl dieses Abstands maßgeblich dazu beitragen kann, dass der Sprühstrahl bereits vor dem Eintreten in die Core Engine den gewünschten Verteilungsgrad bzw. die gewünschte Tröpfchengröße erreicht, so dass zum einen die vollständige Breite und Höhe der Eintrittsöffnung bzw. der Inlet Guide Vanes der Core Engine überstrichen werden können und zum anderen der Eintritt mit dem gewünschten Verteilungsgrad bzw. Zerteilungsgrad erfolgt, so dass die gewünschte Reinigungswirkung eintritt.

Besonders vorteilhaft ist im Rahmen des Verfahrens die Kombination dieses Abstandsbereichs mit dem oben im Kontext der Vorrichtung definierten bevorzugten Bereichen des Winkels α. Bevorzugt ist es in diesem Zusammenhang, dass innerhalb des genannten Bereichs der Abstand der Düsen von der Eintrittsebene der Inlet Guide Vanes so gewählt wird, dass bei dem gegebenen Öffnungswinkel (Sprühwinkel) α die Inlet Guide Vanes vom Sprühkegel vollflächig erfasst werden. Dabei ist bevorzugt die Mittelachse des Sprühkegels im Wesentlichen mittig auf die Inlet Guide Vanes ausgerichtet.

Gemäß einer weiteren bevorzugten Ausführungsform des erfindungsgemäßen Verfahrens schließt die Hauptaustrittsrichtung jeder Düse mit der Profilsehne der Inlet Guide Vanes der Core Engine einen Winkel β von -75° bis 75°, vorzugsweise -35° bis 35° ein. Diese Anpassung der Hauptaustrittsrichtung relativ zur Profilsehne der Inlet Guide Vanes erlaubt einen besseren Durchtritt des Sprühnebels durch den vorderen Bereich bzw. die vorderen Verdichterstufen der Core Engine.

Alternativ kann ein entsprechender Winkel anstelle auf die Profilsehne auf die Rotationsachse bezogen definiert werden. Beispielsweise ist beim Triebwerksmuster CF6-50 ein Winkel β von -27° bezogen auf die Profilsehne bevorzugt, dies entspricht einem Winkel von 0° bezogen auf die Rotationsachse.

Erfindungsgemäß ist es bevorzugt, dass flüssiges Reinigungsmedium mit einer mittleren Tröpfchengröße von 10 bis 500 µm aus den Düsen austritt.

Gemäß einer Variante der Erfindung wird flüssiges Reinigungsmedium den Düsen mit einem Druck von 0,5 bis 100 bar, vorzugsweise 30 bis 80 bar zugeführt.

Der Durchsatz an flüssigem Reinigungsmedium kann pro Düse 1 bis 200 1/min, vorzugsweise 3 bis 20 1/min betragen.

Das Strahltriebwerk kann während der Reinigung mit einer Fan-Drehzahl von 50 bis 500 min-1, vorzugsweise 100 bis 300 min-1, weiter vorzugsweise 120 bis 250 min-1 rotieren gelassen werden.

Als Reinigungsmedium wird bevorzugt eine Dispersion einer Flüssigkeit (bevorzugt Wasser) in einem gasförmigen Medium (bevorzugt Luft) verwendet. Diese Dispersion kann bereits vor der Düsenaustrittsöffnung hergestellt werden, beispielsweise durch den Zusatz von gasförmigem Medium wie beispielsweise Luft zu einer Reinigungsflüssigkeit. Bevorzugt ist es jedoch, wenn bis zur Düsenaustrittsöffnung lediglich flüssiges Reinigungsmedium geführt wird und an der Düsenaustrittsöffnung durch Austritt unter Druck zerstäubt wird, so dass die Mischung aus flüssigem und gasförmigem Medium besteht. Diese Dispersion oder dieses Aerosol wird dann durch die Core Engine hindurchgetragen. Das Reinigungsmedium (bzw. der flüssige Anteil des Aerosols) wird bevorzugt auf einen Bereich von 20 bis 100°C, weiter vorzugsweise 30 bis 80°C, weiter vorzugsweise 50 bis 70°C temperiert.

Ein weiterer Gegenstand der Erfindung ist eine Anordnung aus einem Strahltriebwerk und einer daran zur Vornahme einer Reinigung der Core Engine angebrachten erfindungsgemäßen Vorrichtung, mit den Merkmalen:
a. die Düseneinrichtung ist drehfest mit der Welle des Fans des Strahltriebwerks verbunden;
b. die Drehachsen des Fans des Strahltriebwerk und der Düseneinrichtung sind im Wesentlichen konzentrisch angeordnet;
c. die Austrittsöffnungen der Düsen sind in Axialrichtung hinter der Ebene des Fans angeordnet und/oder die Düsen sind in Zwischenräumen der Fanblades angeordnet oder auf Zwischenräume der Fanblades ausgerichtet, so dass die Düsenstrahlen im Wesentlichen ungehindert durch die Ebene des Fans hindurchtreten können;
   dadurch gekennzeichnet, dass die Austrittsöffnungen der Düsen einen Abstand zur Eintrittsebene der Inlet Guide Vanes der Core Engine von 1 bis 25 cm, vorzugsweise 4 bis 15 cm aufweisen.

Bevorzugt schließt die Hauptaustrittsrichtung jeder Düse mit der Profilsehne der Inlet Guide Vanes der Core Engine einen Winkel β von -75° bis 75°, vorzugsweise -15° bis 15° ein.

Bevorzugt sind die Austrittsöffnungen der Düsen der Düseneinrichtung in einem Radialabstand von der Rotationsachse des Triebwerks angeordnet sind, der dem 0,6 bis 1,2fachen, vorzugsweise 0,6 bis lfachen des Radius der stromauf gerichteten Eintrittsöffnung der ersten Kompressorstufe entspricht.

Nachfolgend werden weitere vorteilhafte Ausführungsformen der erfindungsgemäßen Vorrichtung und Anordnung offenbart, die besondere Vorteile in der Handhabung und im Betrieb bieten.

Die Düseneinrichtung weist bevorzugt erste Anlageflächen zur axialen Anlage an den Fan Blades auf. Beim Aufsetzen der Düseneinrichtung auf den Spinner des Strahltriebwerks bilden diese definierten ersten Anlageflächen einen Anschlag, der die Düseneinrichtung zumindest in Axialrichtung relativ zum Strahltriebwerk definiert positioniert. Beim Aufsetzen kommen diese ersten Anlageflächen gegen Fan Blades in Axialrichtung zur Anlage und stoppen somit die Aufsetzbewegung. Anschließend wird die Düseneinrichtung, wie unten näher erläutert, an den Fan Blades befestigt, die Mittel zur drehfesten Verbindung bringen dabei in Axialrichtung wirkende Kräfte (Zugkräfte) dergestalt auf, dass die definierte axiale Positionierung durch Anlage an den Fan Blades im Reinigungsbetrieb erhalten bleibt.

Die ersten Anlageflächen sind bevorzugt gepolstert und/oder elastisch, beispielsweise als Gummipuffer, ausgebildet. Es handelt sich um mehrere Anlageflächen, bevorzugt drei oder mehr Anlageflächen, die bevorzugt in gleichmäßigen Winkelabstand über den Umfang verteilt sind. Die Erstreckung der Anlageflächen in Radialrichtung sowie Umfangsrichtung ist bevorzugt hinreichend, um eine sichere Positionierung und Kraftaufnahme der aufgesetzten Düseneinrichtung zu bewirken.

Dieser Aspekt der Erfindung hat erkannt, dass im Stand der Technik gemäß WO 2008/113501 A1 die Positionierung der Düseneinrichtung lediglich durch Anlage bzw. Auflage an/auf dem Spinner regelmäßig zu einer undefinierten und/oder dezentrierten Positionierung der Düseneinrichtung relativ zum Strahltriebwerk führt. Im Reinigungsbetrieb bewirkt dies eine Unwucht und/oder einen hohen Verschleiß der Drehkupplung. Hingegen erlaubt die erfindungsgemäß vorgesehene axiale Anlage an den Fan Blades eine definierte Positionierung, die sicherstellt, dass die Achse der Düseneinrichtung (und damit der Drehkupplung) stets in gleicher Richtung verläuft wie die Achse des Strahltriebwerks.

Bevorzugt sind die ersten Anlageflächen an einem ersten Ringbereich der Düseneinrichtung angeordnet. Dieser Ringbereich kann bevorzugt als geschlossener Ring ausgebildet sein, der an dem im aufgesetzten Zustand stromabwärts weisenden Endbereich der Düseneinrichtung angeordnet ist. Die in Axialrichtung stromab weisende Fläche dieses Ringbereichs kann erfindungsgemäß über den gesamten Umfang oder über Teilsegmente des Umfangs als (gepolsterte) erste Anlagefläche ausgebildet sein.

Bei der erfindungsgemäßen Anordnung ist bevorzugt der Innendurchmesser des ersten Ringbereichs identisch mit oder geringfügig größer als der Außendurchmesser des Spinners (der Außendurchmesser in der axialen Ebene, in der die Vorderkanten der Fan Blades liegen). Dies trägt dazu bei, die Düseneinrichtung gegenüber dem Strahltriebwerk nicht nur axial, sondern auch radial genau zu positionieren. Geringfügig größer bedeutet in diesem Zusammenhang, dass der erste Ringbereich gegenüber dem Strahltriebwerk im aufgesetzten Zustand lediglich ein solches radiales Spiel aufweist, dass der gewünschte zentrische Sitz nicht oder allenfalls geringfügig beeinträchtigt wird.

Bei einer vorteilhaften Ausführungsform weist die Düseneinrichtung zusätzlich zweite Anlageflächen zur Anlage am Spinner des Strahltriebwerks auf. Diese können beispielsweise an einem zweiten Ringbereich der Düseneinrichtung angeordnet sein, der in Axialrichtung zwischen dem ersten Ringbereich und der Drehkupplung angeordnet ist. Diese zweiten Anlageflächen können ebenfalls elastisch/gepolstert sein. Die zweiten Anlageflächen können bevorzugt zu einer Zentrierung der aufgesetzten Düseneinrichtung auf dem Strahltriebwerk in einer Radialebene zwischen der stromauf gewandten Spitze des Spinners und der Vorderkante der Fan Blades beitragen.

Insgesamt können somit die ersten und zweiten Anlageflächen gemeinsam zur Zentrierung der Vorrichtung auf dem Spinner des Strahltriebwerks ausgebildet sein.

Bei der erfindungsgemäßen Vorrichtung im aufgesetzten Zustand sowie bei der erfindungsgemäßen Anordnung ist bevorzugt die Massenverteilung der Düseneinrichtung rotationssymmetrisch um deren Drehachse.

Bei einer bevorzugten Ausführungsform der Erfindung umfassen die Mittel zur drehfesten Verbindung mit der Welle des Fans des Strahltriebwerks wenigstens zwei, vorzugsweise drei oder mehr Spannseile und Befestigungsmittel zum Befestigen der Spannseile an den Fanblades. Die Befestigungsmittel sind als separat arretierbare Einzelbefestigungsmittel ausgebildet. Die Verteilung der Befestigungsmittel und/oder Spannseile in Umfangsrichtung kann mit der entsprechenden Verteilung der ersten Auflageflächen korrespondieren oder in Umfangsrichtung zwischen solchen Auflageflächen angeordnet sein.

Die Spannseile sind bevorzugt (beispielsweise mittels Haken bzw. Spannpratzen) an den Fan Blades, bevorzugt an deren Hinterkante, befestigbar. Diese Haken bzw. Spannpratzen können eine hinreichend weiche Kunststoff- oder Gummibeschichtung oder -ummantelung aufweisen.

Die erfindungsgemäße Ausgestaltung der Befestigungsmittel als separat arretierbare Einzelbefestigungsmittel hat wesentliche Vorteile gegenüber der in WO 2008/113501 A1 offenbarten zentralen Spannvorrichtung. In diesem Stand der Technik müssen die Spannseile kompliziert umgelenkt und bis zur Drehkupplung geführt werden, dort ist ein zentraler Spannring vorgesehen, mit dem alle Spannseile gleichzeitig gespannt und damit eine vergleichsweise ungenaue Positionierung der Düseneinrichtung bewirkt wird.

Die erfindungsgemäß vorgesehenen Anlageflächen und die dadurch bewirkte Positionierung der Düseneinrichtung erlauben es, wesentlich einfacher handhabbare Einzelbefestigungsmittel vorzusehen, die sequenziell befestigt und arretiert werden können, da die gewünschte Positionierung bereits durch die Anlageflächen sichergestellt ist. Die Einzelbefestigung erlaubt zudem kurze Spannseile und damit ein einfaches und robustes Spannsystem.

Die Einzelbefestigungsmittel weisen zur Arretierung und Spannung der Spannseile bevorzugt Kniehebel auf. Bei einem Kniehebel ändert sich das Übersetzungsverhältnis zwischen aufgewendeter Kraft zu resultierender Kraft bzw. von primärem Hub zu sekundärem Hub während der Betätigung kontinuierlich. Während der Betätigung in den geschlossenen (arretierten) Zustand nimmt die Hubgeschwindigkeit (ausgeübt auf das Spannseil) bei gleichbleibender Betätigungsgeschwindigkeit ab, die auf das Spannseil ausgeübte Zugkraft hingegen zu.

Diese erfindungsgemäße Ausgestaltung der Einzelbefestigungsmittel erlaubt ein einfaches, sicheres und definiertes Befestigen der Düseneinrichtung an einem Strahltriebwerk ohne Zuhilfenahme von Werkzeug.

Bevorzugt weisen die Einzelbefestigungsmittel Federelemente zur Einstellung einer definierten Vorspannung der Spannseile auf, damit die Düseneinrichtung mit einer definierten Kraft angedrückt wird.

Erfindungsgemäß kann vorgesehen sein, dass die Einzelbefestigungsmittel eine Sicherungseinrichtung zur Sicherung im geschlossenen Zustand aufweisen. Beispielsweise kann der Kniehebel mit einem Splint oder einem Sicherungsstift im geschlossenen Zustand arretiert werden.

Erfindungsgemäß kann vorgesehen sein, dass die Drehkupplung einen Stoßschutz aufweist. Es kann sich beispielsweise um eine insbesondere in Radialrichtung weisende Polsterung (ausgebildet beispielsweise als Kunststoffring) handeln, die die Drehkupplung insbesondere beim Auf- und Absetzen vor Stößen schützt.

Ein Ausführungsbeispiel der Erfindung wird nachfolgend anhand der Zeichnung erläutert. Darin zeigen:
Fig. 1: Schematisch eine Ansicht einer erfindungsgemäßen Vorrichtung montiert an einem Strahltriebwerk;

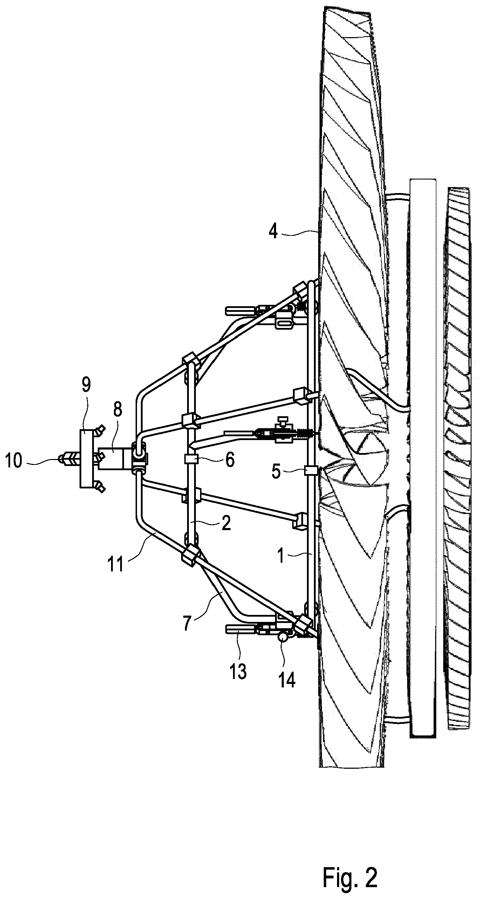

Fig. 2: Schematisch einen Axialschnitt durch das Triebwerk mit aufgesetzter erfindungsgemäßer Vorrichtung;
Fig. 3: Schematisch die Anordnung einer Düse und deren Abstand X relativ zu den Inlet Guide Vanes;
Fig. 4: Schematisch die Bestimmung des Winkels α zwischen Rotationsachse und Hauptaustrittsrichtung einer Düse;
Fig. 5: Schematisch die Bestimmung des Winkels β zwischen der Profilsehne der Inlet Guide Vanes der Core Engine und der Hauptaustrittsrichtung einer Düse;

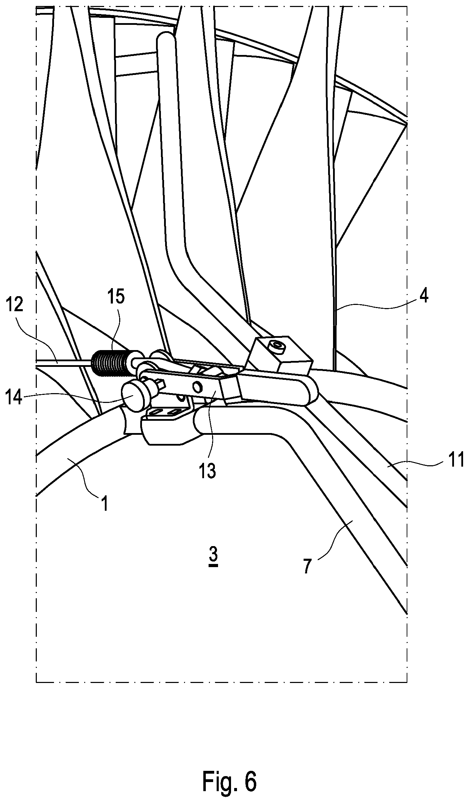

Fig. 6: In einer Detailansicht die Befestigung mittels eines Kniehebels;

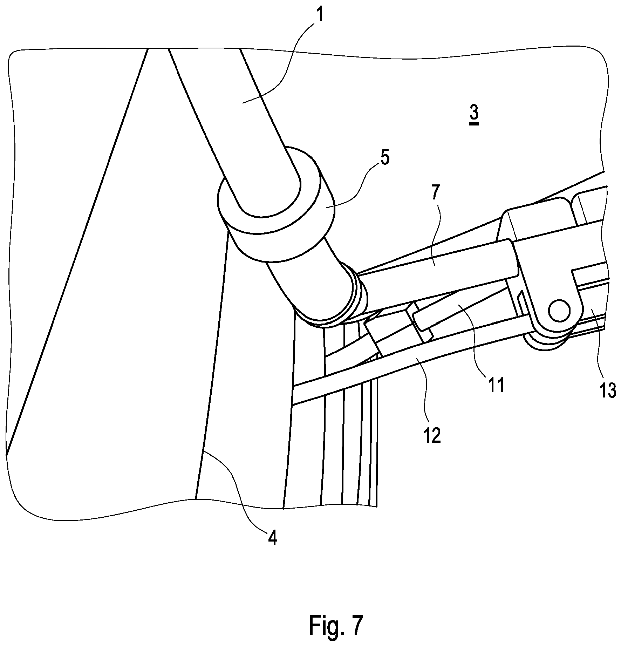

Fig. 7: In einer Detailansicht die Ausgestaltung der ersten Anlageflächen.

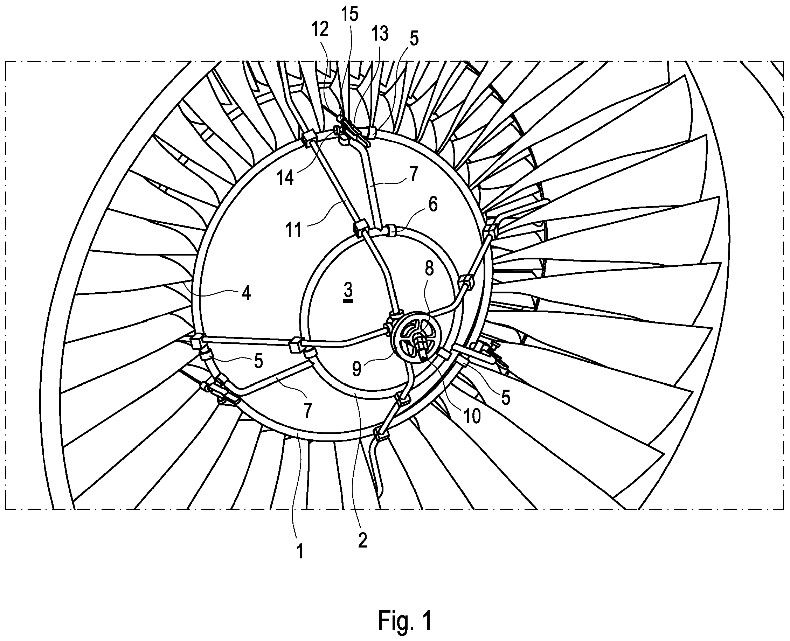

Die Düseneinrichtung weist zwei Ringbereiche bzw. Ringelemente 1, 2 auf, mit deren Hilfe die Düseneinrichtung auf eine Wellennabe bzw. einen Spinner 3 des Fans eines Strahltriebwerks aufgesetzt wird (siehe Fig. 1). Im aufgesetzten Zustand umschließen die Ringelemente 1, 2 den Spinner 3 im Wesentlichen formschlüssig. Der Innendurchmesser des axial stromab angeordneten Ringelements 1 ist geringfügig größer als der Außendurchmesser des Spinners 3 in der axialen Ebene, in der die Vorderkanten der Fan Blades 4 liegen.

Über den Umfang des ersten Ringelements 1 verteilte Gummipuffer 5 bilden erste Anlageflächen, mit denen das Ringelement 1 axial gegen die Vorderkante der Fan Blades 4 anliegt.

Über den Umfang des zweiten Ringelements 2 verteilte Gummipuffer 6 bilden zweite Anlageflächen, mit denen das Ringelement 2 auf dem Spinner 3 anliegt.

Die beiden Ringelemente 1, 2 sind durch Radialstreben 7 miteinander verbunden. An der stromauf weisenden Spitze der Düseneinrichtung (bezogen auf die Strömungsrichtung des Triebwerks) ist eine insgesamt mit 8 bezeichnete Drehkupplung angeordnet, die einen Stoßschutz 9 sowie ein Anschlussstück 10 einer Leitungsverbindung aufweist.

Von dieser Drehkupplung erstrecken sich vier radial nach außen führende Druckleitungen 11, die vier Düsen (nicht dargestellt) mit Reinigungsmedium speisen. Die Druckleitungen 11 sind an den Kreuzungspunkten mit den Ringelementen 1, 2 an diesen Ringelementen fixiert und somit Teil der Tragstruktur der gesamten Düseneinrichtung.

Zur Befestigung der Düseneinrichtung an dem Fan sind Spannseile 12 vorgesehen, die mittels nicht dargestellter Haken an den Hinterkanten des Fan Blades 4 eingehakt werden. Als Einzelbefestigungsmittel zur Fixierung der Spannseile 12 sind Kniehebel 13 vorgesehen, die mittels eines Sicherungsstifts 14 in der arretierten Stellung fixiert werden können. Eine Feder 15 sorgt für eine definierte Spannung der Spannseile 12.

Zum Reinigen der Core Engine wird die Düseneinrichtung in der insbesondere aus den Figur 1 erkennbaren Weise auf den Fan aufgesetzt und an den Fan Blades mittels der Spannseile 12 fixiert. Das Triebwerk wird in Drehung versetzt (dry-cranking). Über die Verbindungsleitung 10, die Drehkupplung 8 und die Druckleitungen 11 werden die Düsen mit Reinigungsmedium aus einer nicht dargestellten Versorgungseinrichtung gespeist.

Dieses Reinigungsmedium überstreicht den Einlass der Core Engine über deren gesamten Umfang und führt so die Reinigung aus.

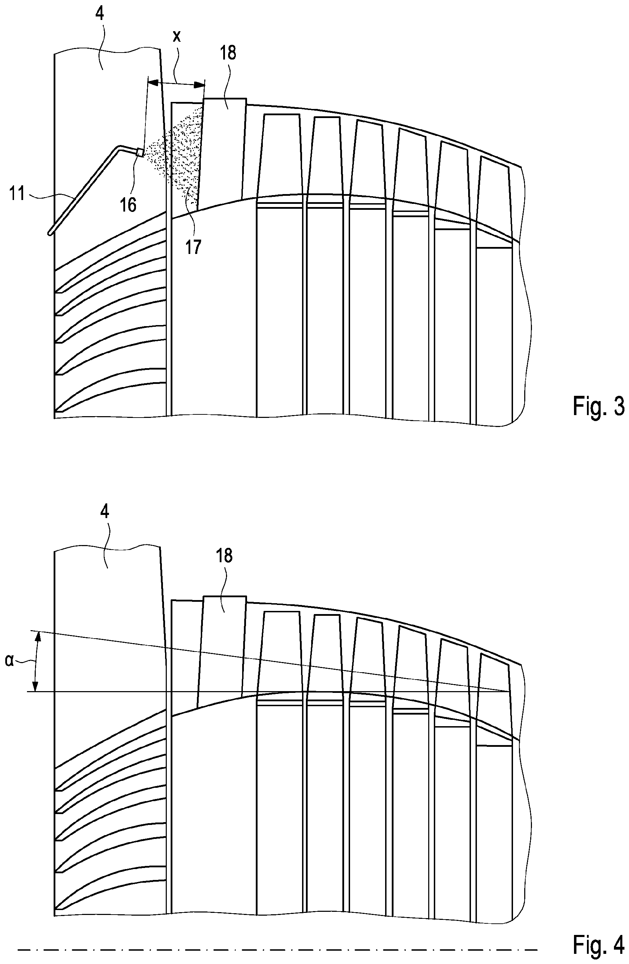

Fig. 3 zeigt schematisch eine Druckleitung 11 und die an deren Ende angeordnete Vollkegeldüse 16, die zwischen Fan Blades 4 angeordnet ist, sowie deren Sprühkegel 17. Der axiale Abstand der Austrittsöffnung der Düse 16 zur Eintrittsebene der Inlet Guide Vanes 18 der Core Engine ist schematisch mit X bezeichnet.

Fig. 4 zeigt schematisch einen Winkel α zwischen der Hauptaustrittsrichtung einer hier nicht dargestellten Düse und einer Achse parallel zur Rotationsachse. Bei dieser Ausführungsvariante ist der Winkel α angenähert an den Winkel, der zwischen der Rotationsachse des Triebwerks und einer zweiten Geraden, die als Tangente an dem radial außen angeordneten Rand des Einlaufs des Kompressors der Core Engine und an der in Strömungsrichtung dahinter angeordneten, radial innen angeordneten konvexen Krümmung des Strömungskanals verläuft.

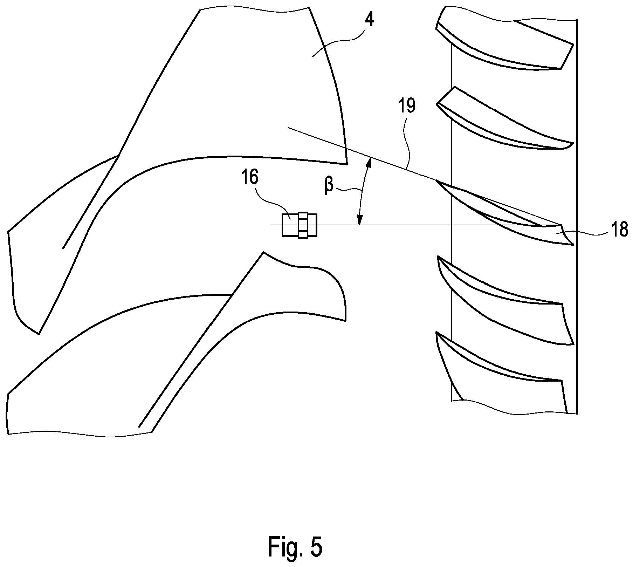

Fig. 5 zeigt schematisch einen Winkel β zwischen Hauptaustrittsrichtung einer Düse 16 und der Profilsehne 19 (bzw. deren gedachter Verlängerung) der Inlet Guide Vanes 18 der Core Engine.

## Patentansprüche

1. Vorrichtung zum Reinigen der Core Engine eines Strahltriebwerks, mit einer Düseneinrichtung, die zum Einbringen von Reinigungsmedium in die Core Engine ausgebildet ist und Mittel zur drehfesten Verbindung mit der Welle des Fans des Strahltriebwerks aufweist; und mit einer Leitungsverbindung (10) zum Zuführen von Reinigungsmedium, die über eine Drehkupplung (8) mit der Düseneinrichtung verbunden ist, **dadurch gekennzeichnet, dass** die Düseneinrichtung wenigstens eine Flachstrahldüse und wenigstens eine Vollkegeldüse (16) oder Hohlkegeldüse aufweist.

2. Vorrichtung nach Anspruch 1, **dadurch gekennzeichnet, dass** sie wenigstens je eine, bevorzugt je zwei Flachstrahldüsen und Vollkegeldüsen aufweist.

3. Vorrichtung nach Anspruch 1 oder 2, **dadurch gekennzeichnet, dass** jede Düse einen Sprühwinkel von 20° bis 120°, vorzugsweise 60° bis 90° aufweist.

4. Vorrichtung nach einem der Ansprüche 1 bis 3, **dadurch gekennzeichnet, dass** die Hauptaustrittsrichtung jeder Düse mit der Rotationsachse der Vorrichtung einen Winkel α von -45° bis 45°, vorzugsweise -5° bis 30° einschließt.

5. Verfahren zum Reinigen der Core Engine eines Strahltriebwerks mittels einer Vorrichtung nach einem der Ansprüche 1 bis 4, **dadurch gekennzeichnet, dass** die Austrittsöffnungen der Düsen einen Abstand zur Eintrittsebene der Inlet Guide Vanes (18) der Core Engine von 1 bis 25 cm, vorzugsweise 4 bis 15 cm aufweisen.

6. Verfahren nach Anspruch 5, **dadurch gekennzeichnet, dass** die Hauptaustrittsrichtung jeder Düse mit der Profilsehne (19) der Inlet Guide Vanes (18) der Core Engine einen Winkel β von--75° bis 75°, vorzugsweise -15° bis 15° einschließt.

7. Verfahren nach Anspruch 5 oder 6, **dadurch gekennzeichnet, dass** flüssiges Reinigungsmedium mit einer mittleren Tröpfchengröße von 10 bis 500 µm aus den Düsen austritt.

8. Verfahren nach einem der Ansprüche 5 bis 7, **dadurch gekennzeichnet, dass** flüssiges Reinigungsmedium den Düsen mit einem Druck von 0,5 bis 100 bar, vorzugsweise 30 bis 80 bar zugeführt wird.

9. Verfahren nach einem der Ansprüche 5 bis 8, **dadurch gekennzeichnet, dass** pro Düse der Durchsatz an flüssigem Reinigungsmedium 1 bis 200 1/min, vorzugsweise 3 bis 20 1/min beträgt, und/oder dass das Strahltriebwerk mit einer Fan-Drehzahl von 50 bis 500 min⁻¹, vorzugsweise 100 bis 300 min⁻¹, weiter vorzugsweise 120 bis 250 min⁻¹ rotieren gelassen wird.

10. Verfahren nach einem der Ansprüche 5 bis 9, **dadurch gekennzeichnet, dass** als Reinigungsmedium eine Dispersion einer Flüssigkeit in einem gasförmigen Medium verwendet wird.

11. Anordnung aus einem Strahltriebwerk und einer daran zur Vornahme einer Reinigung der Core Engine angebrachten Vorrichtung gemäß einem der Ansprüche 1 bis 4, mit den Merkmalen:
a. die Düseneinrichtung ist drehfest mit der Welle des Fans des Strahltriebwerks verbunden;
b. die Drehachsen des Fans des Strahltriebwerk und der Düseneinrichtung sind im Wesentlichen konzentrisch angeordnet;
c. die Austrittsöffnungen der Düsen sind in Axialrichtung hinter der Ebene des Fans angeordnet und/oder die Düsen sind in Zwischenräumen der Fanblades (4) angeordnet oder auf Zwischenräume der Fanblades (4) ausgerichtet, so dass die Düsenstrahlen im Wesentlichen ungehindert durch die Ebene des Fans hindurchtreten können;
wobei die Austrittsöffnungen der Düsen einen Abstand zur Eintrittsebene der Inlet Guide Vanes (18) der Core Engine von 1 bis 25 cm, vorzugsweise 4 bis 15 cm aufweisen.

12. Anordnung nach Anspruch 11, **dadurch gekennzeichnet, dass** die Hauptaustrittsrichtung jeder Düse mit der Profilsehne (19) der Inlet Guide Vanes (18) der Core Engine einen Winkel β von--75° bis 75°, vorzugsweise -15° bis 15° einschließt.

13. Anordnung nach Anspruch 11 oder 12, **dadurch gekennzeichnet, dass** die Austrittsöffnungen der Düsen der Düseneinrichtung in einem Radialabstand von der Rotationsachse des Triebwerks angeordnet sind, der dem 0,6 bis 1,2fachen, vorzugsweise 0,6 bis lfachen des Radius der stromauf gerichteten Eintrittsöffnung der ersten Kompressorstufe entspricht.

## Claims

1. Device for cleaning the core engine of a jet engine, having a nozzle installation which is configured for introducing cleaning medium into the core engine, and means for connecting in a rotationally fixed manner to the shaft of the fan of the jet engine; and having a line connection (10) for supplying cleaning medium, which is connected to the nozzle installation by way of a rotary coupling (8), **characterized in that** the nozzle installation has at least one flat jet nozzle and at least one full cone nozzle (16) or hollow cone nozzle.

2. Device according to Claim 1, **characterized in that** said device has in each case at least one, preferably in each case two flat jet nozzles and full cone nozzles.

3. Device according to Claim 1 or 2, **characterized in that** each nozzle has a spraying angle of 20° to 120°, preferably 60° to 90°.

4. Device according to one of Claims 1 to 3, **characterized in that** the main exit direction of each nozzle conjointly with the rotation axis of the device encloses an angle α of -45° to 45°, preferably -5° to 30°.

5. Method for cleaning the core engine of a jet engine by means of a device according to one of Claims 1 to 4, **characterized in that** the exit openings of the nozzles have a spacing of 1 to 25 cm, preferably 4 to 15 cm, from the entry plane of the inlet guide vanes (18) of the core engine.

6. Method according to Claim 5, **characterized in that** the main exit direction of each nozzle conjointly with the profile chord (19) of the inlet guide vanes (18) of the core engine encloses an angle β of -75° to 75°, preferably -15° to 15°.

7. Method according to Claim 5 or 6, **characterized in that** liquid cleaning medium exits the nozzles by way of a mean droplet size of 10 to 500 µm.

8. Method according to one of Claims 5 to 7, **characterized in that** liquid cleaning medium is supplied to the nozzles at a pressure of 0.5 to 100 bar, preferably 30 to 80 bar.

9. Method according to one of Claims 5 to 8, **characterized in that** the throughput of liquid cleaning medium per nozzle is 1 to 200 1/min, preferably 3 to 20 1/min, and/or **in that** the jet engine is allowed to rotate at a fan rotation speed of 50 to 500 min⁻¹, preferably 100 to 300 min⁻¹, furthermore preferably 120 to 250 min⁻¹.

10. Method according to one of Claims 5 to 9, **characterized in that** a dispersion of a liquid in a gaseous medium is used as cleaning medium.

11. Assembly composed of a jet engine and a device according to one of Claims 1 to 4 attached thereto for performing cleaning of the core engine, said assembly having the following features:
a. the nozzle installation is connected in a rotationally fixed manner to the shaft of the fan of the jet engine;
b. the rotation axes of the fan of the jet engine and of the nozzle installation are disposed so as to be substantially concentric;
c. the exit openings of the nozzles in the axial direction are disposed behind the plane of the fan, and/or the nozzles are disposed in intermediate spaces of the fan blades (4) or aligned toward intermediate spaces of the fan blades (4) such that the nozzle jets can pass through the plane of the fan in a substantially unimpeded manner;
wherein the exit openings of the nozzles have a spacing of 1 to 25 cm, preferably 4 to 15 cm, from the entry plane of the inlet guide vanes (18) of the core engine.

12. Assembly according to Claim 11, **characterized in that** the main exit direction of each nozzle conjointly with the profile chord (19) of the inlet guide vanes (18) of the core engine encloses an angle β of -75° to 75°, preferably -15° to 15°.

13. Assembly according to Claim 11 or 12, **characterized in that** the exit openings of the nozzles of the nozzle installation are disposed at a radial spacing from the rotation axis of the jet engine that corresponds to 0.6 to 1.2 times, preferably 0.6 to 1 times, the radius of the upstream-directed entry opening of the first compressor stage.

## Revendications

1. Dispositif pour le nettoyage du moteur central d'un moteur à réaction, comportant un appareil à buses, qui est configuré pour l'introduction de produit de nettoyage dans le moteur central, et des moyens pour le raccordement solidaire en rotation à l'arbre du ventilateur du moteur à réaction ; et comportant un raccordement de conduite (10) pour l'amenée de produit de nettoyage, qui est raccordé par l'intermédiaire d'un accouplement rotatif (8) à l'appareil à buses, **caractérisé en ce que** l'appareil à buses comprend au moins une buse à jet plat et au moins une buse à cône plein (16) ou une buse à cône creux.

2. Dispositif selon la revendication 1, **caractérisé en ce qu'**il comprend respectivement au moins une, de préférence respectivement deux buses à jet plat et buses à cône plein.

3. Dispositif selon la revendication 1 ou 2, **caractérisé en ce que** chaque buse présente un angle de pulvérisation de 20° à 120°, de préférence de 60° à 90°.

4. Dispositif selon l'une quelconque des revendications 1 à 3, **caractérisé en ce que** la direction de sortie principale de chaque buse forme avec l'axe de rotation du dispositif un angle α de -45° à 45°, de préférence de -5° à 30°.

5. Procédé de nettoyage du moteur central d'un moteur à réaction au moyen d'un dispositif selon l'une quelconque des revendications 1 à 4, **caractérisé en ce que** les ouvertures de sortie des buses présentent une distance par rapport au plan d'entrée des aubes directrices d'entrée (18) du moteur central de 1 à 25 cm, de préférence de 4 à 15 cm.

6. Procédé selon la revendication 5, **caractérisé en ce que** la direction de sortie principale de chaque buse forme avec la corde de profil (19) des aubes directrices d'entrée (18) du moteur central un angle β de -75° à 75°, de préférence de -15° à 15°.

7. Procédé selon la revendication 5 ou 6, **caractérisé en ce que** du produit de nettoyage liquide sort des buses avec une taille moyenne de gouttelette de 10 à 500 µm.

8. Procédé selon l'une quelconque des revendications 5 à 7, **caractérisé en ce que** du produit de nettoyage liquide est amené aux buses avec une pression de 0,5 à 100 bar, de préférence de 30 à 80 bar.

9. Procédé selon l'une quelconque des revendications 5 à 8, **caractérisé en ce que** le débit de produit de nettoyage liquide par buse est de 1 à 200 1/min, de préférence de 3 à 20 1/min, et/ou **en ce que** le moteur à réaction est laissé tourner à une vitesse de rotation du ventilateur de 50 à 500 min⁻¹, de préférence de 100 à 300 min⁻¹, de manière davantage préférée de 120 à 250 min⁻¹.

10. Procédé selon l'une quelconque des revendications 5 à 9, **caractérisé en ce qu'**une dispersion d'un liquide dans un produit gazeux est utilisée en tant que produit de nettoyage.

11. Agencement d'un moteur à réaction et d'un dispositif selon l'une quelconque des revendications 1 à 4 disposé sur celui-ci pour effectuer un nettoyage du moteur central, présentant les caractéristiques suivantes :
a. l'appareil à buses est raccordé de manière solidaire en rotation à l'arbre du ventilateur du moteur à réaction ;
b. les axes de rotation du ventilateur du moteur à réaction et de l'appareil à buses sont agencés essentiellement de manière concentrique ;
c. les ouvertures de sortie des buses sont agencées dans la direction axiale derrière le plan du ventilateur et/ou les buses sont agencées dans des interstices des pales du ventilateur (4) ou sont dirigées vers des interstices des pales du ventilateur (4), de telle sorte que les jets des buses peuvent traverser essentiellement sans encombre le plan du ventilateur ;
les ouvertures de sortie des buses présentant une distance par rapport au plan d'entrée des aubes directrices d'entrée (18) du moteur central de 1 à 25 cm, de préférence de 4 à 15 cm.

12. Agencement selon la revendication 11, **caractérisé en ce que** la direction de sortie principale de chaque buse forme avec la corde de profil (19) des aubes directrices d'entrée (18) du moteur central un angle β de -75° à 75°, de préférence de -15° à 15°.

13. Agencement selon la revendication 11 ou 12, **caractérisé en ce que** les ouvertures de sortie des buses de l'appareil à buses sont agencées à une distance radiale de l'axe de rotation du réacteur qui correspond à 0,6 à 1,2 fois, de préférence 0,6 à 1 fois, le rayon de l'ouverture d'entrée dirigée vers l'amont du premier étage de compresseur.
